(19) **Europäisches Patentamt European Patent Office Office européen des brevets**

(11) **EP 3 226 626 B1**

(12) **EUROPEAN PATENT SPECIFICATION**

(45) Date of publication and mention of the grant of the patent:
**23.02.2022 Bulletin 2022/08**

(21) Application number: **14909527.5**

(22) Date of filing: **31.12.2014**

(51) International Patent Classification (IPC):
***G01S 19/06*** (2010.01)

(52) Cooperative Patent Classification (CPC):
**H04W 64/00; G01S 19/06**

(86) International application number:
**PCT/CN2014/095990**

(87) International publication number:
**WO 2016/106720 (07.07.2016 Gazette 2016/27)**

(54) **POSITIONING METHOD AND MOBILE TERMINAL**

POSITIONIERUNGSVERFAHREN UND MOBILES ENDGERÄT

PROCÉDE DE LOCALISATION, DISPOSITIF ET TERMINAL MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2017 Bulletin 2017/40**

(73) Proprietor: **HUAWEI TECHNOLOGIES CO., LTD. Shenzhen Guangdong 518129 (CN)**

(72) Inventors:
• **LU, Henghui Shenzhen Guangdong 518129 (CN)**
• **LONG, Shuiping Shenzhen Guangdong 518129 (CN)**

• **LIU, Yongxiang Shenzhen Guangdong 518129 (CN)**

(74) Representative: **Maiwald Patent- und Rechtsanwaltsgesellschaft mbH Elisenhof Elisenstraße 3 80335 München (DE)**

(56) References cited:
| | |
|---|---|
| CN-A- 103 238 356 | CN-A- 103 314 613 |
| US-A1- 2005 122 259 | US-A1- 2007 132 639 |
| US-A1- 2010 178 932 | US-A1- 2013 032 874 |
| US-A1- 2014 077 991 | |

## Description

### TECHNICAL FIELD

The present invention relates to the field of communications technologies, and specifically relates to a positioning method and a mobile terminal.

### BACKGROUND

As an assisted global navigation satellite system (AGNSS for short) is characterized by quick response, high positioning precision and low power consumption. By providing AGNSS assistant data (for example, an almanac, an ephemeris, a clock or a reference location) to a global navigation satellite system (Global Navigation Satellite System, GNSS for short) of a mobile terminal by using an AGNSS server, a positioning speed of the GNSS of the mobile terminal can be increased. The AGNSS server determines the reference location of the mobile terminal and provides the AGNSS assistant data according to the reference location and information that the AGNSS server already has, such as the almanac and the ephemeris, so as to implement quick positioning. The reference location is generally determined according to a base station geographic location of a serving cell in which the mobile terminal is located, and the AGNSS server may obtain the base station geographic location by querying a base station information database. However, in an actual application, the base station information database is often incomplete, that is, a base station geographic location may not exist. For example, when a new mobile communications network (for example, 4G or 5G) is constructed, a construction speed of a base station information database may not keep pace with that of the network, resulting in a lack of a complete base station information database and a failure of AGNSS positioning.

US 2010/178 932 A1 discloses a system and method for assisted GPS positioning. Upon a location request from a RNC/BSC, in case location information for a serving base station is missing, the known location of a neighboring base station, the location of another cell within the same Location Area as the serving cell, and a fixed point assigned to the area that the Serving Mobile Location Center is serving, are determined by the network as fallback estimates for the position of the mobile device.

US 2007/132 639 A1 discloses a system and method for determining an approximate position of a mobile device, so as to expedite the obtaining of a fix by the satellite positioning receiver of the mobile device.

US 2005/122 259 A1 discloses a system and method that exploits reference positions for a mobile device to obtain GPS fixes even if reception conditions for the satellite signals are poor.

## SUMMARY

Embodiments of the present invention provide a positioning method and a mobile terminal, as defined in independent claims 1 and 5, respectively, so as to increase an AGNSS positioning success probability and enhance AGNSS robustness.

A mobile terminal obtains base station information of neighboring cells of a serving cell in which the mobile terminal is currently located; the mobile terminal obtains AGNSS assistant data according to the base station information of the neighboring cells; and the mobile terminal performs positioning according to the AGNSS assistant data. In the technical solutions of the present invention, after the mobile terminal fails to perform AGNSS positioning according to base station information of the serving cell in which the mobile terminal is currently located, the mobile terminal obtains the AGNSS assistant data by using the base station information of the neighboring cells. Therefore, compared with the prior art in which only the base station information of the current serving cell is used, an AGNSS positioning success probability can be effectively increased, and AGNSS robustness can also be enhanced.

### BRIEF DESCRIPTION OF DRAWINGS

FIG. 1 is a schematic diagram of an embodiment of a positioning method according to an embodiment of the present invention;

FIG. 2 is a schematic diagram of another embodiment of a positioning method according to an embodiment of the present invention;

FIG. 3 is a schematic diagram of another embodiment of a positioning method according to an embodiment of the present invention;

FIG. 4 is a schematic diagram of another embodiment of a positioning method according to an embodiment of the claimed invention;

FIG. 5 is a schematic diagram of another embodiment of a positioning method according to an embodiment of the claimed invention;

FIG. 6 is a schematic diagram of an embodiment of a mobile terminal according to an embodiment of the present invention;

FIG. 7 is a schematic diagram of another embodiment of a mobile terminal according to an embodiment of the present invention;

FIG. 8 is a schematic diagram of another embodiment of a mobile terminal according to an embodiment of the present invention;

FIG. 9 is a schematic diagram of another embodiment of a mobile terminal according to an embodiment of the present invention; and

FIG. 10 is a schematic structural diagram of a mobile terminal according to an embodiment of the present invention.

## DESCRIPTION OF EMBODIMENTS

Embodiments of the present invention provide a positioning method and a mobile terminal, so as to increase an AGNSS positioning success probability and enhance AGNSS robustness.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

The technical solutions of the present invention may be applied to various communications systems, such as: a Global System for Mobile Communications (GSM for short), a Code Division Multiple Access (CDMA for short) system, a Wideband Code Division Multiple Access (WCDMA for short), a general packet radio service (GPRS for short), and a Long Term Evolution (LTE for short).

A base station may be a base station (English full name: Base Transceiver Station, BTS for short) in the GSM or CDMA, may be a base station (NodeB) in the WCDMA, or may be an evolved NodeB (eNB or e-NodeB for short) in the LTE, which is not limited in the present invention.

A mobile terminal may be a mobile phone or a notebook, or may be an in-vehicle computer, and is not limited in the present invention.

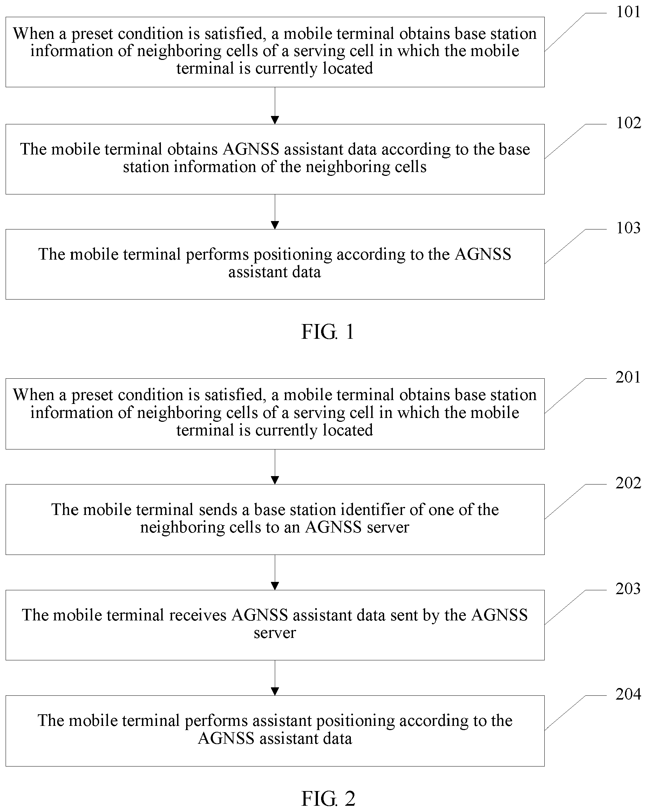

Referring to FIG. 1, an embodiment of a positioning method different from the claimed invention includes the following steps.

101. When a preset condition is satisfied, a mobile terminal obtains base station information of neighboring cells of a serving cell in which the mobile terminal is currently located.

In this specification, the mobile terminal is in a state in which AGNSS positioning is enabled.

In this embodiment of the present invention, the base station information includes but is not limited to: a base station identifier, received signal strength (RSS for short), a mobile country code (MCC for short), a mobile network code (MNC for short) or a location area code (LAC for short), or the like, and is not specifically limited herein.

It should be noted that the preset condition includes: a serving cell in which the mobile terminal is located in a preset network standard changes, or receives an assisted global navigation satellite system, AGNSS, error message. In addition, the preset condition may include other content, and is not specifically limited herein.

102. The mobile terminal obtains AGNSS assistant data according to the base station information of the neighboring cells.

In this embodiment of the present invention, for a capability of the mobile terminal and different requirements on a positioning success probability, a latency, and the like, the required AGNSS assistant data may be obtained in different manners according to the base station information of the neighboring cells. The AGNSS assistant data includes at least one of an almanac, an ephemeris, a clock, a Doppler shift, a code delay, an azimuth or an elevation angle.

In this embodiment of the present invention, after the mobile terminal fails to perform AGNSS positioning according to base station information of the serving cell in which the mobile terminal is currently located, the mobile terminal obtains the AGNSS assistant data by using the base station information of the neighboring cells. Therefore, a success probability of obtaining the AGNSS assistant data can be effectively increased, and AGNSS robustness can also be enhanced.

103. The mobile terminal performs positioning according to the AGNSS assistant data.

In this embodiment of the present invention, after the mobile terminal receives the AGNSS assistant data provided by an AGNSS server, a GNSS in the mobile terminal performs positioning according to information, such as a Doppler shift or a code delay, in the assistant data.

In this technical solution of the present invention, after a mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

Referring to FIG. 2, another embodiment of a positioning method different from the claimed invention includes the following steps.

201. When a preset condition is satisfied, a mobile terminal obtains base station information of neighboring cells of a serving cell in which the mobile terminal is currently located.

In the present invention, the mobile terminal is in a state in which AGNSS positioning is enabled.

It should be noted that the preset condition includes: a serving cell in which the mobile terminal is located in a preset network standard changes, or receives an assisted global navigation satellite system AGNSS error message. In addition, the preset condition may include other content, and is not specifically limited herein.

It should be noted that the preset network standard may be the Time Division-Synchronous Code Division Multiple Access TD-SCDMA or another 4G network standard, and is not specifically limited herein.

Optionally, the AGNSS error message is used to indicate that an AGNSS server has not obtained AGNSS assistant data.

It should be noted that the AGNSS error message received by the mobile terminal may be used to indicate another AGNSS error cause, and is not specifically limited herein.

Optionally, the obtaining, by a mobile terminal, base station information of neighboring cells of a serving cell in which the mobile terminal is currently located includes:

obtaining, by the mobile terminal, broadcast information of the neighboring cells; and
obtaining, by the mobile terminal, the base station information of the neighboring cells according to the broadcast information of the neighboring cells.

Further, the obtaining, by a mobile terminal, base station information of neighboring cells of a serving cell in which the mobile terminal is currently located includes:

obtaining, by the mobile terminal, broadcast information of the neighboring cells and signal strength information of the neighboring cells, where the signal strength information includes either a received signal strength indicator or reference signal received power; and
obtaining, by the mobile terminal, the base station information of the neighboring cells according to the broadcast information of the neighboring cells and the signal strength information of the neighboring cells.

202. The mobile terminal sends a base station identifier of one of the neighboring cells to an AGNSS server.

It should be noted that the neighboring cells are arranged based on priorities, and the neighboring cells may be arranged based on priorities according to a status of a base station information database, base station signal strength, and the like, which is not specifically limited herein.

In this embodiment of the present invention, for example, for the first time, a base station identifier of a neighboring cell having a highest priority may be sent to the AGNSS server. If the mobile terminal fails to receive AGNSS assistant data, a base station identifier of a neighboring cell whose priority ranks next is sent to the AGNSS server. The process is repeated until the mobile terminal successfully receives AGNSS assistant data.

203. The mobile terminal receives AGNSS assistant data sent by the AGNSS server.

In this embodiment of the present invention, after the mobile terminal fails to perform AGNSS positioning according to base station information of the serving cell in which the mobile terminal is currently located, the mobile terminal obtains the AGNSS assistant data by using the base station information of the neighboring cells. Therefore, an AGNSS positioning success probability can be effectively increased, and AGNSS robustness can also be enhanced.

204. The mobile terminal performs positioning according to the AGNSS assistant data.

In this embodiment of the present invention, after the mobile terminal receives the AGNSS assistant data provided by the AGNSS server, a GNSS in the mobile terminal performs satellite searching and positioning according to information, such as a Doppler shift or a code delay, in the assistant data.

In this technical solution of the present invention, after a mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

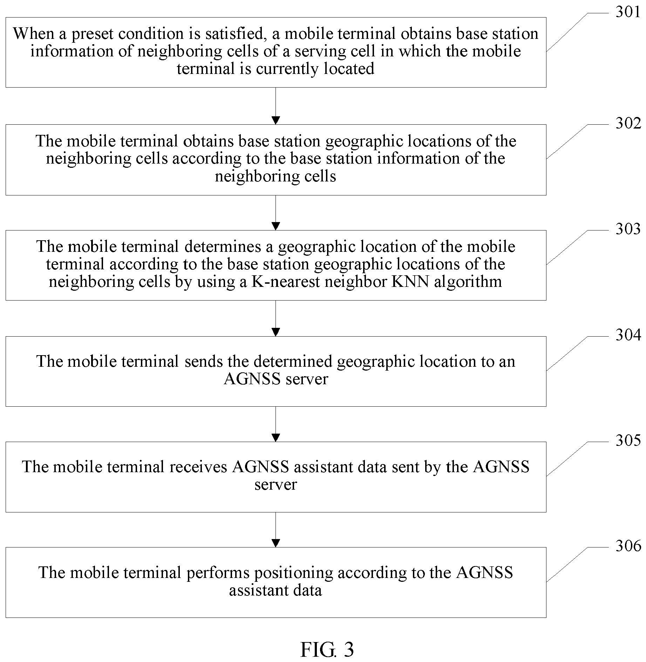

Referring to FIG. 3, another embodiment of a positioning method different from the claimed invention includes the following steps.

301. When a preset condition is satisfied, a mobile terminal obtains base station information of neighboring cells of a serving cell in which the mobile terminal is currently located.

For details of this embodiment of the present invention, refer to step 201 of the embodiment in FIG. 2.

302. The mobile terminal obtains base station geographic locations of the neighboring cells according to the base station information of the neighboring cells.

It should be noted that the base station geographic locations of the neighboring cells may be directly extracted from broadcast information (for example, in a CDMA network), or may be obtained by using a Cell-ID positioning method from a base station information database stored in a third party or in the mobile terminal, which is not specifically limited herein.

303. The mobile terminal determines a current geographic location $\hat{p}$ of the mobile terminal according to the base station geographic locations of the neighboring cells by using a K-nearest neighbor KNN algorithm.

In this embodiment of the present invention,

$$\hat{p} = \sum_{i=1}^{N} \omega_i p_i, \ \omega_i = \frac{r_i}{\sum_{i=1}^{N} r_i}$$

, where $p_i$ represents a base station geographic location of an ith neighboring cell; $\omega_i$ represents a weight of the base station geographic location of the ith neighboring cell, and $r_i$ represents strength of a signal received by the mobile terminal from a base station of the ith neighboring cell.

304. The mobile terminal sends the determined

geographic location $\hat{p}$ to an AGNSS server.

In this embodiment of the present invention, different from the embodiment corresponding to FIG. 2, the current geographic location $\hat{p}$ of the mobile terminal is sent to the AGNSS server.

305. The mobile terminal receives AGNSS assistant data sent by the AGNSS server.

306. The mobile terminal performs positioning according to the AGNSS assistant data.

In this technical solution of the present invention, after a mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

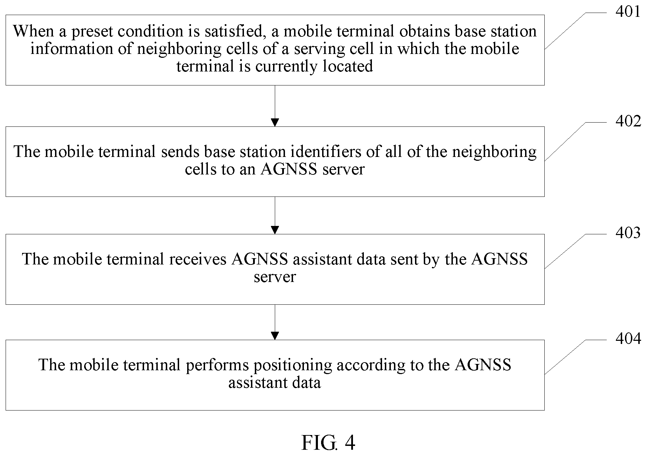

Referring to FIG. 4, an embodiment of a positioning method according to an embodiment of the claimed invention includes the following steps.

401. When a preset condition is satisfied, a mobile terminal obtains base station information of neighboring cells of a serving cell in which the mobile terminal is currently located.

For details of this embodiment of the present invention, refer to step 201 of the embodiment in FIG. 2.

402. The mobile terminal sends base station identifiers of all of the neighboring cells to an AGNSS server.

According to the claimed invention, the base station identifiers of all of the neighboring cells include base station identifiers of all neighboring cells of a same standard and neighboring cells of different standards, so that the AGNSS server provides corresponding AGNSS assistant data according to the base station identifiers of all the neighboring cells.

In this embodiment of the present invention, different from the embodiment corresponding to FIG. 3, the base station identifiers of all of the neighboring cells are sent to the AGNSS server.

403. The mobile terminal receives AGNSS assistant data sent by the AGNSS server. 404. The mobile terminal performs positioning according to the AGNSS assistant data.

In this technical solution of the present invention, after a mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

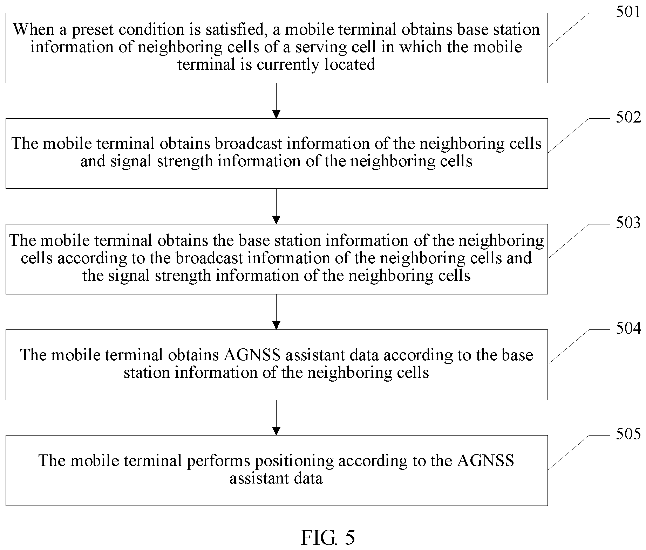

Referring to FIG. 5, an embodiment of a specific application scenario of a positioning method according to an embodiment of the claimed invention includes the following steps.

501. When a preset condition is satisfied, a mobile terminal obtains base station information of neighboring cells of a serving cell in which the mobile terminal is currently located.

For details of this embodiment of the present invention, refer to step 201 of the embodiment in FIG. 2.

502. The mobile terminal obtains broadcast information of the neighboring cells and signal strength information of the neighboring cells.

In this embodiment of the present invention, the mobile terminal listens to broadcast information of the serving cell in which the mobile terminal is currently located, and extracts frequencies of the neighboring cells from system information blocks (SIB for short) in the broadcast information. The mobile terminal listens to broadcast information of the neighboring cells at the frequencies of the neighboring cells, and measures signal strength of the neighboring cells, so as to obtain signal strength information of the neighboring cells.

In this embodiment of the present invention, the signal strength information includes either a received signal strength indicator or reference signal received power.

503. The mobile terminal obtains the base station information of the neighboring cells according to the broadcast information of the neighboring cells and the signal strength information of the neighboring cells.

It should be noted that, optionally, the mobile terminal obtains the base station information of the neighboring cells according to the broadcast information of the neighboring cells, which is not specifically limited herein.

504. The mobile terminal obtains AGNSS assistant data according to the base station information of the neighboring cells.

Optionally, the obtaining, by the mobile terminal, AGNSS assistant data according to the base station information of the neighboring cells includes:

sending, by the mobile terminal, a base station identifier of one of the neighboring cells to an AGNSS server; and
receiving, by the mobile terminal, the AGNSS assistant data sent by the AGNSS server.

In this embodiment of the present invention, the neighboring cells are arranged based on priorities. For example, for the first time, a base station identifier of a neighboring cell having a highest priority may be sent to the AGNSS server. If the mobile terminal fails to receive the AGNSS assistant data, a base station identifier of a neighboring cell whose priority ranks next is sent to the AGNSS server. The process is repeated until the mobile terminal successfully receives the AGNSS assistant data.

It should be noted that the neighboring cells may be arranged based on priorities according to a status of a base station database, base station signal strength, and the like, which is not specifically limited herein.

Optionally, the obtaining, by the mobile terminal, AGNSS assistant data according to the base station information of the neighboring cells includes:

obtaining, by the mobile terminal, base station geographic locations of the neighboring cells according to the base station information of the neighboring cells;

determining, by the mobile terminal, a current geographic location $\hat{p}$ of the mobile terminal according to the base station geographic locations of the neighboring cells by using a KNN algorithm, where

$$\hat{p} = \sum_{i=1}^{N} \omega_i p_i, \quad \omega_i = \frac{r_i}{\sum_{i=1}^{N} r_i}$$

, $p_i$ represents a base station geographic location of an ith neighboring cell, $\omega_i$ represents a weight of the base station geographic location of the ith neighboring cell, and $r_i$ represents strength of a signal received by the mobile terminal from a base station of the ith neighboring cell;

sending, by the mobile terminal, the determined geographic location $\hat{p}$ to the AGNSS server; and

receiving, by the mobile terminal, the AGNSS assistant data sent by the AGNSS server.

It should be noted that the base station geographic locations of the neighboring cells may be directly extracted from the broadcast information (for example, in a CDMA network), or may be obtained by using a Cell-ID positioning method from a base station information database stored in a third party or in the mobile terminal, which is not specifically limited herein.

Optionally, the obtaining, by the mobile terminal, AGNSS assistant data according to the base station information of the neighboring cells includes:

sending, by the mobile terminal, base station identifiers of all of the neighboring cells to the AGNSS server; and

receiving, by the mobile terminal, the AGNSS assistant data sent by the AGNSS server. In this embodiment of the claimed invention, the base station identifiers of all of the neighboring cells include base station identifiers of all neighboring cells of a same standard and neighboring cells of different standards, so that the AGNSS server provides corresponding AGNSS assistant data according to the base station identifiers of all the neighboring cells.

505. The mobile terminal performs positioning according to the AGNSS assistant data.

In this technical solution of the present invention, after a mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

For the convenience of implementing the foregoing related method in the embodiments of the present invention, the following further provides a related terminal configured to implement the foregoing method.

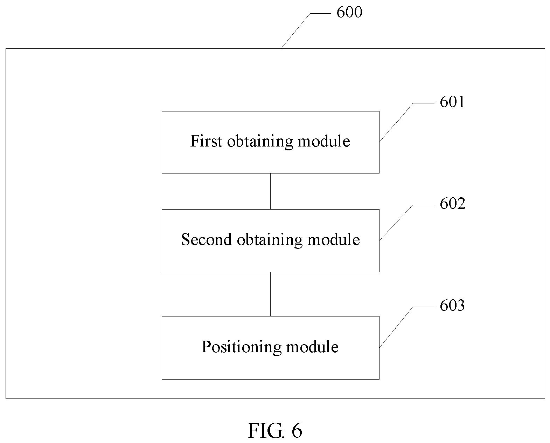

Referring to FIG. 6, an embodiment of a mobile terminal 600 different from the claimed invention includes: a first obtaining module 601, a second obtaining module 602 and a positioning module 603, where

the first obtaining module 601 is configured to: when a preset condition is satisfied, obtain base station information of neighboring cells of a serving cell in which the mobile terminal is currently located, where the preset condition includes: a serving cell in which the mobile terminal is located in a preset network standard changes, or receives an assisted global navigation satellite system AGNSS error message;

the second obtaining module 602 is configured to obtain AGNSS assistant data according to the base station information of the neighboring cells obtained by the first obtaining module 601; and

the positioning module 603 is configured to perform positioning according to the AGNSS assistant data obtained by the second obtaining module 602.

In this technical solution of the present invention, after the mobile terminal fails to perform AGNSS positioning according to base station information of a serving cell in which the mobile terminal is currently located, the mobile terminal obtains AGNSS assistant data by using base station information of neighboring cells. Therefore, compared with the prior art in which only the base station information of the current serving cell is used, an AGNSS positioning success probability can be effectively increased, and AGNSS robustness can also be enhanced.

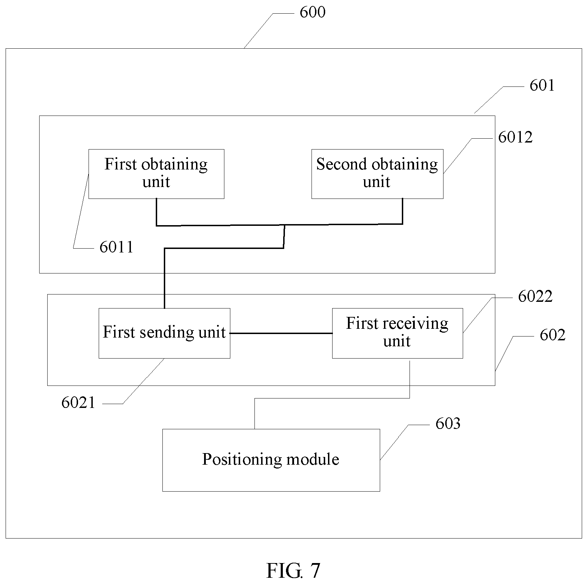

Referring to FIG. 7, optionally, the AGNSS error message is used to indicate that an AGNSS server has not obtained the AGNSS assistant data.

Optionally, the first obtaining module 601 includes a first obtaining unit 6011, where the first obtaining unit 6011 is configured to: obtain broadcast information of the neighboring cells, and obtain the base station information of the neighboring cells according to the broadcast information of the neighboring cells.

Optionally, the first obtaining module 601 includes a second obtaining unit 6012, where the second obtaining unit 6012 is configured to: obtain broadcast information of the neighboring cells and signal strength information of the neighboring cells, and obtain the base station information of the neighboring cells according to the broadcast information of the neighboring cells and the signal strength information of the neighboring cells, where the signal strength information includes either a received signal strength indicator or reference signal received power.

Optionally, the second obtaining module 602 includes: a first sending unit 6021 and a first receiving unit 6022, where

the first sending unit 6021 is configured to send a base station identifier of one of the neighboring cells to the AGNSS server; and
the first receiving unit 6022 is configured to: after the first sending unit 6021 sends the base station identifier of the one of the neighboring cells to the AGNSS server, receive the AGNSS assistant data sent by the AGNSS server.

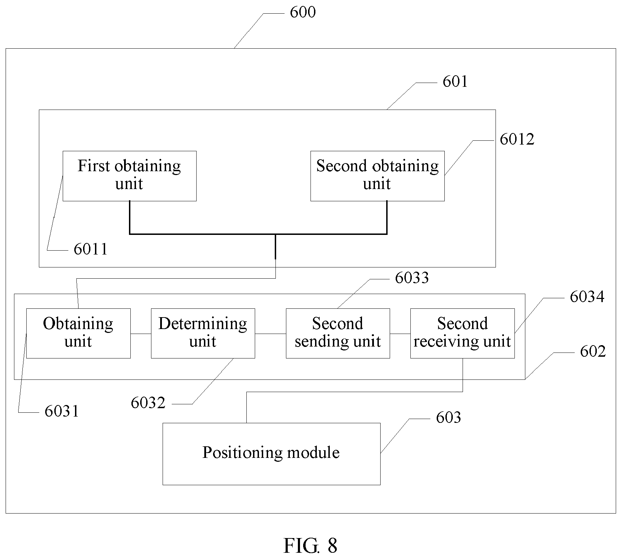

Referring to FIG. 8, optionally, the AGNSS error message is used to indicate that an AGNSS server has not obtained the AGNSS assistant data.

Optionally, the first obtaining module 601 includes a first obtaining unit 6011, where
the first obtaining unit 6011 is configured to: obtain broadcast information of the neighboring cells, and obtain the base station information of the neighboring cells according to the broadcast information of the neighboring cells.

Optionally, the first obtaining module 601 includes a second obtaining unit 6012, where the second obtaining unit 6012 is configured to: obtain broadcast information of the neighboring cells and signal strength information of the neighboring cells, and obtain the base station information of the neighboring cells according to the broadcast information of the neighboring cells and the signal strength information of the neighboring cells, where the signal strength information includes either a received signal strength indicator or reference signal received power.

Optionally, the second obtaining module 602 includes: an obtaining unit 6031, a determining unit 6032, a second sending unit 6033 and a second receiving unit 6034, where

the obtaining unit 6031 is configured to obtain base station geographic locations of the neighboring cells according to the base station information of the neighboring cells;

the determining unit 6032 is configured to determine, by using a KNN algorithm, a current geographic location $\hat{p}$ of the mobile terminal according to the base station geographic locations of the neighboring cells obtained by the obtaining unit 6031, where

$$\hat{p} = \sum_{i=1}^{N} \omega_i p_i, \quad \omega_i = \frac{r_i}{\sum_{i=1}^{N} r_i}$$

, $p_i$ represents a base station geographic location of an ith neighboring cell, $\omega_i$ represents a weight of the base station geographic location of the ith neighboring cell, and $r_i$ represents strength of a signal received by the mobile terminal from a base station of the ith neighboring cell;

the second sending unit 6033 is configured to send the geographic location $\hat{p}$ determined by the determining unit 6032 to the AGNSS server; and
the second receiving unit 6034 is configured to: after the second sending unit 6033 sends the geographic location $\hat{p}$, receive the AGNSS assistant data sent by the AGNSS server.

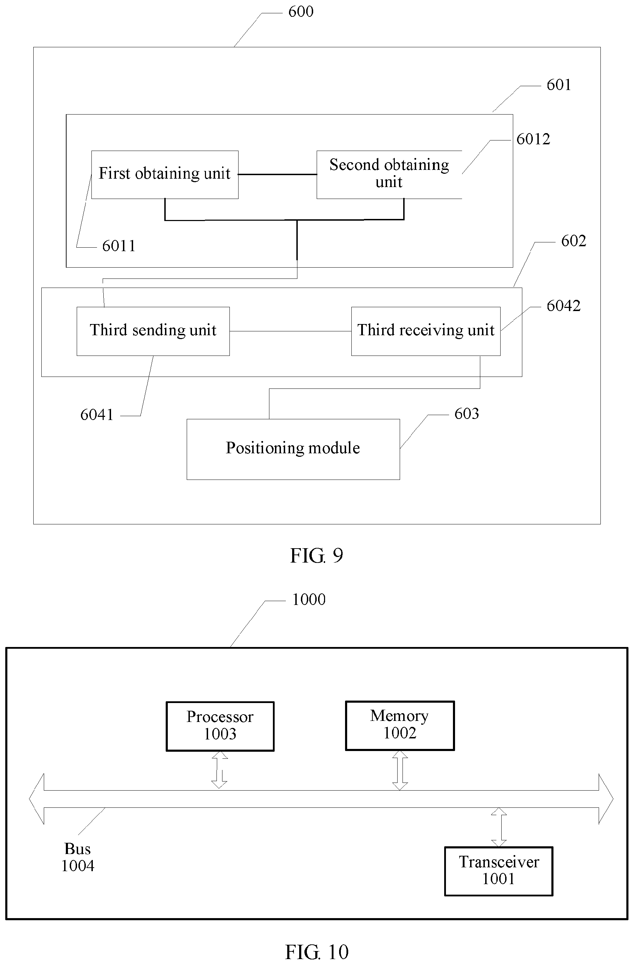

Referring to FIG. 9, optionally, the AGNSS error message is used to indicate that an AGNSS server has not obtained the AGNSS assistant data.

Optionally, the first obtaining module 601 includes a first obtaining unit 6011, where the first obtaining unit 6011 is configured to: obtain broadcast information of the neighboring cells, and obtain the base station information of the neighboring cells according to the broadcast information of the neighboring cells.

Optionally, the first obtaining module 601 includes a second obtaining unit 6012, where

the second obtaining unit 6012 is configured to: obtain broadcast information of the neighboring cells and signal strength information of the neighboring cells, and obtain the base station information of the neighboring cells according to the broadcast information of the neighboring cells and the signal strength information of the neighboring cells, where the signal strength information includes either a received signal strength indicator or reference signal received power;
the second obtaining module 602 is configured to obtain AGNSS assistant data according to the base station information of the neighboring cells obtained by the first obtaining module 601; and
the second obtaining module 602 includes: a third sending unit 6041 and a third receiving unit 6042, where
the third sending unit 6041 is configured to send base station identifiers of all of the neighboring cells to an AGNSS server; and
the third receiving unit 6042 is configured to: after the third sending unit 6041 sends the base station identifiers of all of the neighboring cells to the AGNSS server, receive the AGNSS assistant data sent by the AGNSS server.

The embodiments shown in FIG. 6 to FIG. 9 describe a specific structure of the mobile terminal from the perspective of functional modules, and the following describes a specific structure of a mobile terminal from the perspective hardware by using an embodiment in FIG. 10.

Referring to FIG. 10, FIG. 10 is a schematic structural diagram of a mobile terminal 1000 according to an embodiment of the present invention, including: a transceiver 1001, a memory 1002, a processor 1003 and a bus 1004, where the transceiver 1001, the memory 1002 and the processor 1003 are connected to the bus 1004;

> the transceiver 1001 is configured to receive or send data; and
> the memory 1002 is configured to store a program, and the processor 1003 is configured to invoke the program to perform the following operations:
> when a preset condition is satisfied, obtaining base station information of neighboring cells of a serving cell in which the mobile terminal is currently located, where the preset condition includes: a serving cell in which the mobile terminal is located in a preset network standard changes, or receives an assisted global navigation satellite system AGNSS error message;
> obtaining AGNSS assistant data according to the base station information of the neighboring cells; and
> performing positioning according to the AGNSS assistant data.

Optionally, the AGNSS error message is used to indicate that an AGNSS server has not obtained the AGNSS assistant data.

Optionally, the obtaining, by the processor, base station information of neighboring cells of a serving cell in which the mobile terminal is currently located includes:

> obtaining, by the processor, broadcast information of the neighboring cells; and
> obtaining, by the processor, the base station information of the neighboring cells according to the broadcast information of the neighboring cells.

Optionally, the obtaining, by the processor, base station information of neighboring cells of a serving cell in which the mobile terminal is currently located includes:

> obtaining, by the processor, broadcast information of the neighboring cells and signal strength information of the neighboring cells, where the signal strength information includes either a received signal strength indicator or reference signal received power; and
> obtaining, by the processor, the base station information of the neighboring cells according to the broadcast information of the neighboring cells and the signal strength information of the neighboring cells.

Optionally, the obtaining, by the processor, AGNSS assistant data according to the base station information of the neighboring cells includes:

> sending, by the processor, a base station identifier of one of the neighboring cells to the AGNSS server; and
> receiving, by the processor, the AGNSS assistant data sent by the AGNSS server.

Optionally, the obtaining, by the processor, AGNSS assistant data according to the base station information of the neighboring cells includes:

> obtaining, by the processor, base station geographic locations of the neighboring cells according to the base station information of the neighboring cells;
> determining, by the processor, a current geographic location $\hat{p}$ of the mobile terminal according to the base station geographic locations of the neighboring cells by using a K-nearest neighbor KNN algorithm,

$$\hat{p} = \sum_{i=1}^{N} \omega_i p_i, \quad \omega_i = \frac{r_i}{\sum_{i=1}^{N} r_i}$$

> where , $p_i$ represents a base station geographic location of an ith neighboring cell, $\omega_i$ represents a weight of the base station geographic location of the ith neighboring cell, and $r_i$ represents strength of a signal received by the processor from a base station of the ith neighboring cell;
> sending, by the processor, the determined geographic location $\hat{p}$ to the AGNSS server; and
> receiving, by the processor, the AGNSS assistant data sent by the AGNSS server.

Optionally, the obtaining, by the processor, AGNSS assistant data according to the base station information of the neighboring cells includes:

> sending, by the processor, base station identifiers of all of the neighboring cells to the AGNSS server; and
> receiving, by the processor, the AGNSS assistant data sent by the AGNSS server.

It should be noted that, in the foregoing embodiments, the descriptions of the embodiments have their respective focuses. For a part that is not described in detail in an embodiment, refer to related descriptions in other embodiments. For example, for a part that is not described in detail in the embodiment in FIG. 10, refer to related descriptions in the positioning method embodiments or the mobile terminal embodiments in FIG. 1 to FIG. 9.

It can be seen from the above that in this embodiment of the present invention, when a preset condition is satisfied, the mobile terminal obtains base station information of neighboring cells of a serving cell in which the mobile terminal is currently located; the mobile terminal obtains AGNSS assistant data according to the base station information of the neighboring cells; and the mobile terminal performs positioning according to the AGNSS assistant data. In the technical solutions of the present invention, after the mobile terminal fails to perform AGNSS positioning according to base station information of the serving cell in which the mobile terminal is currently located, the mobile terminal obtains the AGNSS assistant data by using the base station information of the neighboring cells. Therefore, compared with the prior art in which only the base station information of the current serving cell is used, an AGNSS positioning success probability can be effectively increased, and AGNSS robustness can also be enhanced.

In the several embodiments provided in the present application, it should be understood that the disclosed apparatus and method may be implemented in other manners. For example, the described apparatus embodiment is merely an example. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. Integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device, or the like) to perform all or some of the steps of the methods described in the embodiments of the present invention. The foregoing storage medium includes: any medium that can store a program code, such as a USB flash drive, a removable hard disk, a read-only memory (ROM), a random access memory (RAM), a magnetic disk, or an optical disc.

The foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A positioning method, comprising:

   when a preset condition is satisfied, obtaining (101), by a mobile terminal, base station information of neighboring cells of a serving cell in which the mobile terminal is currently located, wherein the preset condition comprises: a serving cell in which the mobile terminal is located in a preset network standard changes, or the mobile terminal receives an assisted global navigation satellite system ,AGNSS, error message;
   obtaining (102), by the mobile terminal, AGNSS assistant data according to the base station information of the neighboring cells; and
   performing (103), by the mobile terminal, positioning according to the AGNSS assistant data, **characterized in that**
   the obtaining (102), by the mobile terminal, AGNSS assistant data according to the base station information of the neighboring cells comprises:

   sending (402), by the mobile terminal, base station identifiers of all of the neighboring cells to the AGNSS server, wherein the base station identifiers of all of the neighboring cells include base station identifiers of all neighboring cells of the same standard and neighboring cells of different standards; and
   receiving (403), by the mobile terminal, the AGNSS assistant data sent by the AGNSS server..

**2.** The positioning method according to claim 1, wherein the AGNSS error message is used to indicate that an AGNSS server has not obtained the AGNSS assistant data.

**3.** The positioning method according to claim 1 or 2, wherein the obtaining (101), by a mobile terminal, base station information of neighboring cells of a serving cell in which the mobile terminal is currently located comprises:

obtaining, by the mobile terminal, broadcast information of the neighboring cells; and
obtaining, by the mobile terminal, the base station information of the neighboring cells according to the broadcast information of the neighboring cells.

**4.** The positioning method according to claim 1 or 2, wherein the obtaining (101), by a mobile terminal, base station information of neighboring cells of a serving cell in which the mobile terminal is currently located comprises:

obtaining (502), by the mobile terminal, broadcast information of the neighboring cells and signal strength information of the neighboring cells, wherein the signal strength information comprises either a received signal strength indicator or reference signal received power; and
obtaining (503), by the mobile terminal, the base station information of the neighboring cells according to the broadcast information of the neighboring cells and the signal strength information of the neighboring cells.

**5.** A mobile terminal (600), comprising:

a first obtaining module (601), configured to: when a preset condition is satisfied, obtain (101) base station information of neighboring cells of a serving cell in which the mobile terminal is currently located, wherein the preset condition comprises: a serving cell in which the mobile terminal is located in a preset network standard changes, or the mobile terminal receives an assisted global navigation satellite system , AGNSS, error message;
a second obtaining module (602), configured to obtain (102) AGNSS assistant data according to the base station information of the neighboring cells obtained by the first obtaining module (601); and
a positioning module (603), configured to perform (103) positioning according to the AGNSS assistant data obtained by the second obtaining module (602),
**characterized in that**

the second obtaining module (602) comprises:

a sending unit (6041), configured to send (402) base station identifiers of all of the neighboring cells to the AGNSS server, wherein the base station identifiers of all of the neighboring cells include base station identifiers of all neighboring cells of the same standard and neighboring cells of different standards; and
a receiving unit (6042), configured to: after the sending unit sends the base station identifiers of all of the neighboring cells to the AGNSS server, receive (403) the AGNSS assistant data sent by the AGNSS server.

**6.** The mobile terminal (600) according to claim 5, wherein the AGNSS error message is used to indicate that an AGNSS server has not obtained the AGNSS assistant data.

**7.** The mobile terminal (600) according to claim 5 or 6, wherein the first obtaining module (601) comprises: a first obtaining unit (6011), configured to: obtain broadcast information of the neighboring cells, and obtain the base station information of the neighboring cells according to the broadcast information of the neighboring cells.

**8.** The mobile terminal (600) according to claim 5 or 6, wherein the first obtaining module (601) comprises: a second obtaining unit (6012), configured to: obtain (502) broadcast information of the neighboring cells and signal strength information of the neighboring cells, and obtain (503) the base station information of the neighboring cells according to the broadcast information of the neighboring cells and the signal strength information of the neighboring cells, wherein the signal strength information comprises either a received signal strength indicator or reference signal received power.

**Patentansprüche**

**1.** Positionierungsverfahren, das Folgendes umfasst:

wenn eine im Voraus eingestellte Bedingung erfüllt ist, Erhalten (101) durch ein mobiles Endgerät von Basisstationsinformationen benachbarter Zellen einer bedienenden Zelle, in der sich das mobile Endgerät derzeit befindet, wobei die im Voraus eingestellte Bedingung Folgendes umfasst: eine bedienende Zelle, in der sich das mobile Endgerät befindet, in einem im Voraus eingestellten Netzstandard ändert sich, oder das mobile Endgerät empfängt eine Fehlermeldung eines unterstützten globalen Navigationssatellitensystems, AGNSS-Fehlermeldung;

Erhalten (102) durch das mobile Endgerät von AGNSS-Unterstützungsdaten gemäß den Basisstationsinformationen der benachbarten Zellen; und

Ausführen (103) durch das mobile Endgerät von Positionierung gemäß den AGNSS-Unterstützung sdaten,

**dadurch gekennzeichnet, dass**

das Erhalten (102) durch das mobile Endgerät von AGNSS-Unterstützungsdaten gemäß den Basisstationsinformationen der benachbarten Zellen Folgendes umfasst:

Senden (402) durch das mobile Endgerät von Basisstationskennungen aller benachbarten Zellen zu dem AGNSS-Server, wobei die Basisstationskennungen aller benachbarten Zellen Basisstationskennungen aller benachbarten Zellen desselben Standards und benachbarten Zellen anderer Standards enthalten; und

Empfangen (403) durch das mobile Endgerät der durch den AGNSS-Server gesendeten AGNS S -Unterstützungsdaten.

2. Positionierungsverfahren nach Anspruch 1, wobei die AGNSS-Fehlermeldung verwendet wird, um anzugeben, dass ein AGNSS-Server die AGNSS-Unterstützungsdaten nicht erhalten hat.

3. Positionierungsverfahren nach Anspruch 1 oder 2, wobei das Erhalten (101) durch ein mobiles Endgerät von Basisstationsinformationen benachbarter Zellen einer bedienenden Zelle, in der sich das mobile Endgerät derzeit befindet, Folgendes umfasst:

Erhalten durch das mobile Endgerät von Rundsendeinformationen der benachbarten Zellen; und

Erhalten durch das mobile Endgerät der Basisstationsinformationen der benachbarten Zellen gemäß den Rundsendeinformationen der benachbarten Zellen.

4. Positionierungsverfahren nach Anspruch 1 oder 2, wobei das Erhalten (101) durch ein mobiles Endgerät von Basisstationsinformationen benachbarter Zellen einer bedienenden Zelle, in der sich das mobile Endgerät derzeit befindet, Folgendes umfasst:

Erhalten (502) durch das mobile Endgerät von Rundsendeinformationen der benachbarten Zellen und Signalstärkeninformationen der benachbarten Zellen, wobei die Signalstärkeninformationen entweder ein Kennzeichen für die Stärke des empfangenen Signals oder eine Referenzsignalempfangsleistung umfassen; und

Erhalten (503) durch das mobile Endgerät der Basisstationsinformationen der benachbarten Zellen gemäß den Rundsendeinformationen der benachbarten Zellen und den Signalstärkeninformationen der benachbarten Zellen.

5. Mobiles Endgerät (600), das Folgendes umfasst:

ein erstes Erhaltemodul (601), das konfiguriert ist: dann, wenn eine im Voraus eingestellte Bedingung erfüllt ist, Basisstationsinformationen benachbarter Zellen einer bedienenden Zelle, in der sich das mobile Endgerät derzeit befindet, zu erhalten (101), wobei die im Voraus eingestellte Bedingung Folgendes umfasst: eine bedienende Zelle, in der sich das mobile Endgerät befindet, in einem im Voraus eingestellten Netzstandard ändert sich, oder

das mobile Endgerät empfängt eine Fehlermeldung eines unterstützten globalen Navigationssatellitensystems, AGNSS-Fehlermeldung;

ein zweites Erhaltemodul (602), das konfiguriert ist, AGNSS-Unterstützungsdaten gemäß den durch das erste Erhaltemodul (601) erhaltenen Basisstationsinformationen der benachbarten Zellen zu erhalten (102); und

ein Positionierungsmodul (603), das konfiguriert ist, eine Positionierung gemäß den durch das zweite Erhaltemodul (602) erhaltenen AGNSS-Unterstützungsdaten auszuführen (103),

**dadurch gekennzeichnet, dass**

das zweite Erhaltemodul (602) Folgendes umfasst:

eine Sendeeinheit (6041), die konfiguriert ist, Basisstationskennungen aller benachbarten Zellen zu dem AGNSS-Server zu senden (402), wobei die Basisstationskennungen aller benachbarten Zellen Basisstationskennungen aller benachbarten Zellen desselben Standards und benachbarten Zellen anderer Standards enthalten; und

eine Empfangseinheit (6042), die konfiguriert ist: die durch den AGNSS-Server gesendeten AGNSS-Unterstützungsdaten zu empfangen (403), nachdem die Sendeeinheit die Basisstationskennungen aller benachbarten Zellen zu dem AGNSS-Server gesendet hat.

6. Mobiles Endgerät (600) nach Anspruch 5, wobei die AGNSS-Fehlermeldung verwendet wird, um anzugeben, dass der AGNSS-Server die AGNSS-Unterstützungsdaten nicht erhalten hat.

7. Mobiles Endgerät (600) nach Anspruch 5 oder 6, wobei das erste Erhaltemodul (601) Folgendes umfasst:

eine erste Erhalteeinheit (6011), die konfiguriert ist: Rundsendeinformationen der benachbarten Zellen zu erhalten und die Basisstationsinformationen der benachbarten Zellen gemäß den Rundsendeinformationen der benachbarten Zellen zu erhalten.

8. Mobiles Endgerät (600) nach Anspruch 5 oder 6, wobei das erste Erhaltemodul (601) Folgendes umfasst:

eine zweite Erhalteeinheit (6012), die konfiguriert ist: Rundsendeinformationen der benachbarten Zellen und Signalstärkeninformationen der benachbarten Zellen zu erhalten (502) und die Basisstationsinformationen der benachbarten Zellen gemäß den Rundsendeinformationen der benachbarten Zellen und den Signalstärkeninformationen der benachbarten Zellen zu erhalten (503), wobei die Signalstärkeninformationen entweder ein Kennzeichen der Stärke des empfangenen Signals oder eine Referenzsignalempfangsleistung umfassen.

## Revendications

1. Procédé de positionnement, comprenant :

lorsqu'une condition prédéfinie est satisfaite, l'obtention (101), par un terminal mobile, d'informations de station de base de cellules voisines d'une cellule de desserte dans laquelle le terminal mobile est actuellement situé, la condition prédéfinie comprenant : une cellule de desserte dans laquelle le terminal mobile est situé dans une norme de réseau prédéfinie change, ou le terminal mobile reçoit un message d'erreur de système global de navigation satellitaire assistée, AGNSS ;
l'obtention (102), par le terminal mobile, de données d'assistant AGNSS en fonction des informations de station de base des cellules voisines ; et
la réalisation (103), par le terminal mobile, d'un positionnement en fonction des données d'assistant AGNSS,
**caractérisé en ce que**
l'obtention (102), par le terminal mobile, de données d'assistant AGNSS en fonction des informations de station de base des cellules voisines comprend :

l'envoi (402), par le terminal mobile, d'identifiants de station de base de toutes les cellules voisines au serveur AGNSS, les identifiants de station de base de toutes les cellules voisines comprenant des identifiants de station de base de toutes les cellules voisines de la même norme et de cellules voisines de normes différentes ; et
la réception (403), par le terminal mobile, des données d'assistant AGNSS envoyées par le serveur AGNSS.

2. Procédé de positionnement selon la revendication 1, le message d'erreur AGNSS étant utilisé pour indiquer qu'un serveur AGNSS n'a pas obtenu les données d'assistant AGNSS.

3. Procédé de positionnement selon la revendication 1 ou 2, l'obtention (101), par un terminal mobile, d'informations de station de base de cellules voisines d'une cellule de desserte dans laquelle le terminal mobile est actuellement situé comprenant :

l'obtention, par le terminal mobile, d'informations de diffusion des cellules voisines ; et
l'obtention, par le terminal mobile, des informations de station de base des cellules voisines en fonction des informations de diffusion des cellules voisines.

4. Procédé de positionnement selon la revendication 1 ou 2, l'obtention (101), par un terminal mobile, d'informations de station de base de cellules voisines d'une cellule de desserte dans laquelle le terminal mobile est situé actuellement comprenant :

l'obtention (502), par le terminal mobile, d'informations de diffusion des cellules voisines et d'informations d'intensité de signal des cellules voisines, les informations d'intensité de signal comprenant soit un indicateur d'intensité de signal reçu, soit une puissance reçue de signal de référence ; et
l'obtention (503), par le terminal mobile, des informations de station de base des cellules voisines en fonction des informations de diffusion des cellules voisines et des informations d'intensité de signal des cellules voisines.

5. Terminal mobile (600), comprenant :

un premier module d'obtention (601), configuré pour : lorsqu'une condition prédéfinie est satisfaite, obtenir (101) des informations de station de base de cellules voisines d'une cellule de desserte dans laquelle le terminal mobile est actuellement situé, la condition prédéfinie comprenant : une cellule de desserte dans laquelle le terminal mobile est situé dans une norme de réseau prédéfinie change, ou le terminal mobile reçoit un message d'erreur de système global de navigation satellitaire assistée, AGNSS ;
un second module d'obtention (602), configuré pour obtenir (102) des données d'assistant AGNSS en fonction des informations de station de base des cellules voisines obtenues par le premier module d'obtention (601) ; et

un module de positionnement (603), configuré pour réaliser (103) un positionnement en fonction des données d'assistant AGNSS obtenues par le second module d'obtention (602), **caractérisé en ce que**

le second module d'obtention (602) comprend :

une unité d'envoi (6041), configurée pour envoyer (402) des identifiants de station de base de toutes les cellules voisines au serveur AGNSS, les identifiants de station de base de toutes les cellules voisines comprenant des identifiants de station de base de toutes les cellules voisines de la même norme et de cellules voisines de normes différentes ; et

une unité de réception (6042), configurée pour : après que l'unité d'envoi a envoyé les identifiants de station de base de toutes les cellules voisines au serveur AGNSS, recevoir (403) les données d'assistant AGNSS envoyées par le serveur AGNSS.

6. Terminal mobile (600) selon la revendication 5, le message d'erreur AGNSS étant utilisé pour indiquer qu'un serveur AGNSS n'a pas obtenu les données d'assistant AGNSS.

7. Terminal mobile (600) selon la revendication 5 ou 6, le premier module d'obtention (601) comprenant : une première unité d'obtention (6011), configurée pour: obtenir des informations de diffusion des cellules voisines, et obtenir les informations de station de base des cellules voisines en fonction des informations de diffusion des cellules voisines.

8. Terminal mobile (600) selon la revendication 5 ou 6, le premier module d'obtention (601) comprenant : une seconde unité d'obtention (6012), configurée pour : obtenir (502) des informations de diffusion des cellules voisines et des informations d'intensité de signal des cellules voisines, et obtenir (503) les informations de station de base des cellules voisines en fonction des informations de diffusion des cellules voisines et des informations d'intensité de signal des cellules voisines, les informations d'intensité de signal comprenant soit un indicateur d'intensité de signal reçu, soit une puissance reçue de signal de référence.

When a preset condition is satisfied, a mobile terminal obtains base station information of neighboring cells of a serving cell in which the mobile terminal is currently located

— 101

The mobile terminal obtains AGNSS assistant data according to the base station information of the neighboring cells

— 102

The mobile terminal performs positioning according to the AGNSS assistant data

— 103

FIG. 1

When a preset condition is satisfied, a mobile terminal obtains base station information of neighboring cells of a serving cell in which the mobile terminal is currently located

— 201

The mobile terminal sends a base station identifier of one of the neighboring cells to an AGNSS server

— 202

The mobile terminal receives AGNSS assistant data sent by the AGNSS server

— 203

The mobile terminal performs assistant positioning according to the AGNSS assistant data

— 204

FIG. 2

```
                                                                    ┌─ 301
┌──────────────────────────────────────────────────────────┐
│  When a preset condition is satisfied, a mobile terminal obtains base station │
│  information of neighboring cells of a serving cell in which the mobile │
│               terminal is currently located              │
└──────────────────────────────────────────────────────────┘
                             │
                             ▼                                      ┌─ 302
┌──────────────────────────────────────────────────────────┐
│   The mobile terminal obtains base station geographic locations of the │
│     neighboring cells according to the base station information of the │
│                      neighboring cells                   │
└──────────────────────────────────────────────────────────┘
                             │
                             ▼                                      ┌─ 303
┌──────────────────────────────────────────────────────────┐
│   The mobile terminal determines a geographic location of the mobile │
│    terminal according to the base station geographic locations of the │
│    neighboring cells by using a K-nearest neighbor KNN algorithm │
└──────────────────────────────────────────────────────────┘
                             │
                             ▼                                      ┌─ 304
┌──────────────────────────────────────────────────────────┐
│   The mobile terminal sends the determined geographic location to an │
│                        AGNSS server                      │
└──────────────────────────────────────────────────────────┘
                             │
                             ▼                                      ┌─ 305
┌──────────────────────────────────────────────────────────┐
│  The mobile terminal receives AGNSS assistant data sent by the AGNSS │
│                           server                         │
└──────────────────────────────────────────────────────────┘
                             │
                             ▼                                      ┌─ 306
┌──────────────────────────────────────────────────────────┐
│   The mobile terminal performs positioning according to the AGNSS │
│                       assistant data                     │
└──────────────────────────────────────────────────────────┘
```

FIG. 3

When a preset condition is satisfied, a mobile terminal obtains base station information of neighboring cells of a serving cell in which the mobile terminal is currently located ⎯ 401

The mobile terminal sends base station identifiers of all of the neighboring cells to an AGNSS server ⎯ 402

The mobile terminal receives AGNSS assistant data sent by the AGNSS server ⎯ 403

The mobile terminal performs positioning according to the AGNSS assistant data ⎯ 404

FIG. 4

When a preset condition is satisfied, a mobile terminal obtains base station information of neighboring cells of a serving cell in which the mobile terminal is currently located — 501

The mobile terminal obtains broadcast information of the neighboring cells and signal strength information of the neighboring cells — 502

The mobile terminal obtains the base station information of the neighboring cells according to the broadcast information of the neighboring cells and the signal strength information of the neighboring cells — 503

The mobile terminal obtains AGNSS assistant data according to the base station information of the neighboring cells — 504

The mobile terminal performs positioning according to the AGNSS assistant data — 505

FIG. 5

600

First obtaining module — 601

Second obtaining module — 602

Positioning module — 603

FIG. 6

600

601

6012

First obtaining unit

Second obtaining unit

6011

First sending unit

First receiving unit

6022

602

6021

Positioning module

603

FIG. 7

FIG. 8

600

601

6012

First obtaining unit

Second obtaining unit

6011

602

6042

Third sending unit

Third receiving unit

6041

603

Positioning module

FIG. 9

1000

Processor 1003

Memory 1002

Bus 1004

Transceiver 1001

FIG. 10

**EP 3 226 626 B1**

## REFERENCES CITED IN THE DESCRIPTION

### Patent documents cited in the description

- US 2010178932 A1
- US 2007132639 A1
- US 2005122259 A1